Europäisches Patentamt

European Patent Office

Office européen des brevets

(19)

(11) Numéro de publication : **0 024 597**
**B2**

(12) **NOUVEAU FASCICULE DE BREVET EUROPÉEN**

(45) Date de publication du nouveau fascicule du brevet : 06.07.88

(51) Int. Cl.⁴ : **B 23 C   5/24**

(21) Numéro de dépôt : **80104674.9**

(22) Date de dépôt : **08.08.80**

(54) Outil de coupe à cartouches porte-plaquette interchangeables.

(30) Priorité : **31.08.79 CH 7896/79**

(43) Date de publication de la demande :
**11.03.81 Bulletin 81/10**

(45) Mention de la délivrance du brevet :
**21.09.83 Bulletin 83/38**

(45) Mention de la décision concernant l'opposition :
**06.07.88 Bulletin 88/27**

(84) Etats contractants désignés :
**AT BE DE FR GB IT LU NL SE**

(56) Documents cités :
DE-A- 2 250 283
DE-A- 2 320 486
DE-A- 2 510 653
DE-A- 2 756 819
DE-B- 1 206 273
FR-A- 2 066 176
GB-B- 1 432 913
WERKSTATT UND BETRIEB, vol. 110 no. 5, mai 1977,
Carl Hanser Verlag Munich DE pages 271-272
MACHINE MODERNE, no. 817, juillet 1977, Paris FR
pages 42-43

(73) Titulaire : STELLRAM S.A.
Route de l'Etraz
CH-1260 Nyon, Vaud (CH)

(72) Inventeur : Raye, Pierre
Au Pélard 13
CH-1197 Prangins Vaud (CH)
Inventeur : Jaquiery, Henri
Route de Divonne 3bis
CH-1260 Nyon Vaud (CH)
Inventeur : Gehri, Hermann
La Bossière
CH-1197 Prangins Vaud (CH)

(74) Mandataire : Micheli, Michel-Pierre et al
MICHELI & CIE 118, Rue du Rhône Case Postale 47
CH-1211 Genève 6 (CH)

## Description

La présente invention se rapporte à un outil de coupe, par exemple une fraise, à cartouches porte-plaquette interchangeables, comportant un corps de forme générale cylindrique présentant des logements répartis à son extrémité périphérique antérieure et destinés à recevoir de façon amovible les cartouches comportant chacune à son extrémité antérieure une plaquette de coupe, fixée sur la cartouche au moyen d'une vis traversant un orifice central de la plaquette.

On connaît déjà des outils de coupe du type précité (Machine Moderne, no. 817, juillet 1977, Paris FR, p. 42), dans lesquels les cartouches sont positionnées axialement par une butée fixe, ce qui rend possible le changement rapide de cartouches sans obligation de procéder à des réglages de la position de celles-ci. Toutefois, dans ces outils, les surfaces d'appui sont prévues de telle sorte que les efforts axiaux exercés sur la plaquette de coupe et par là sur la cartouche tendent à pousser la surface d'appui de la cartouche contre celle du corps de l'outil. Or, dans le cas d'efforts axiaux plus importants, comme par exemple en cas de casse accidentelle d'une plaquette de coupe ou en cas de blocage insuffisant de la cartouche, la piste d'appui du corps risque d'être endommagée. En outre, cette conception de la butée rend impossible la mise hors service provisoire d'une ou de plusieurs plaquettes, puisque les cartouches ne peuvent pas être reculées.

L'outil de coupe, objet de cette invention, vise à obvier aux inconvénients ci-dessus, et est caractérisé par le fait que le corps de l'outil présente une piste d'appui périphérique dont la surface est dirigée vers l'arrière dudit corps et par le fait que chaque cartouche est munie à son extrémité postérieure d'un talon présentant une face d'appui dirigée vers l'avant de la cartouche et destinée à venir, dans une position de service, en butée contre ladite piste d'appui du corps, et par le fait que les moyens de fixation de chaque cartouche dans son logement prévu dans le corps comprennent une première vis destinée à coopérer avec un orifice traversant la cartouche et avec un filetage pratiqué dans le corps, les axes de cet orifice et de ce filetage étant situés dans un plan oblique par rapport au plan de la piste d'appui respectivement de la face d'appui et dirigé d'arrière en avant, de telle sorte qu'en position de service vissée, cette vis maintienne la face d'appui du talon de la cartouche contre la piste d'appui du corps de l'outil.

Généralement, la face d'appui du talon de la cartouche et la piste d'appui du corps de l'outil sont perpendiculaires à l'axe longitudinal de celui-ci.

Deux formes d'exécution de l'outil de coupe selon l'invention seront maintenant décrites à titre d'exemples et en référence au dessin annexé.

Les figures 1 et 2 sont des vues respectivement en coupe et de face d'une première forme d'exécution.

Les figures 3 et 4 sont des vues respectivement en coupe et de face d'une seconde forme d'exécution.

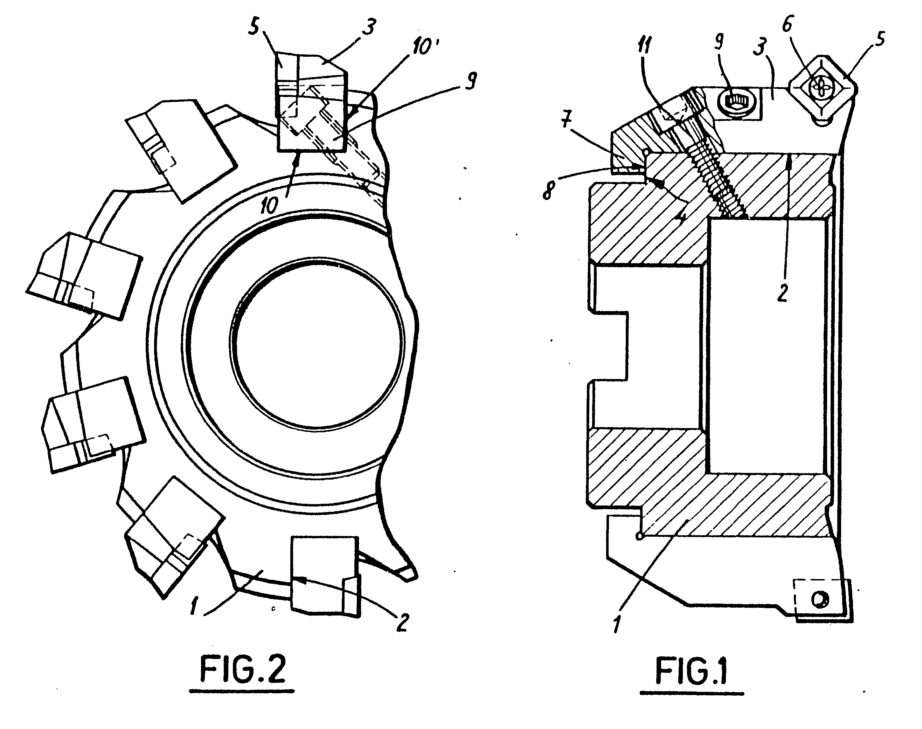

En référence tout d'abord aux figures 1 et 2, une première forme d'exécution de l'outil de coupe selon l'invention, plus particulièrement une fraise, comporte un corps plein 1, de forme générale cylindrique, présentant à son extrémité périphérique antérieure des logements 2 destinés à recevoir des cartouches porte-plaquette 3. Ce corps 1 présente en outre une piste d'appui périphérique 4 dont la surface est dirigée vers l'arrière du corps.

Chaque cartouche 3 comporte à son extrémité antérieure un logement destiné à recevoir une plaquette de coupe 5, ici fixée de façon amovible et conventionnelle au moyen d'une vis 6. Le même corps de fraise peut recevoir des cartouches 3 de différentes géométries, c'est-à-dire portant des plaquettes de coupe 5 disposées selon des orientations différentes, en fonction de travaux à effectuer (surfaçage, dressage, ébauche, finition, etc.).

Chaque cartouche porte-plaquette 3 est munie en outre à son extrémité postérieure d'un talon 7 présentant une face d'appui 8 dirigée vers l'avant de la cartouche. Cette face d'appui 8 est destinée à venir, dans la position de service illustrée à la figure 1, en butée contre la piste d'appui 4 du corps 1 de la fraise.

Dans cette première forme d'exécution, les cartouches porte-plaquette 3 sont fixées sur le corps 1 de fraise au moyen d'une vis de blocage 9, dont l'axe est situé dans un plan parallèle au plan de la piste d'appui 4 respectivement de la face d'appui 8, et servant à bloquer les cartouches 3 contre les parois 10, 10' de leur logement 2, et d'une vis 11 dont l'axe est situé dans un plan oblique par rapport au plan de la piste d'appui 4 respectivement de la face d'appui 8 et dirigé d'arrière en avant, cette vis 11 servant à amener la face d'appui 8 du talon 7 des cartouches 3 en butée contre la piste d'appui 4 du corps 1 de fraise.

Si nécessaire, par exemple pour effectuer des travaux de finition ou si un état de surface de la pièce usinée particulièrement fin est exigé, il est possible de réaliser un réglage individuel très précis de la position axiale de chaque cartouche au moyen de la vis 11. Ce réglage axial est rendu possible par le jeu relativement important laissé entre les vis 9 et 11 et leurs orifices respectifs de passage pratiqués dans la cartouche 3, qui sont de forme allongée. Dans le cas d'un tel réglage, ou lorsque l'on désire, par exemple avec une fraise équipée d'une ou deux cartouches de type « finition », reculer ces dernières pour une mise hors-service provisoire, la face d'appui 8 du talon 7 de la cartouche 3 ne vient plus en butée contre la piste d'appui 4 du corps 1 de fraise.

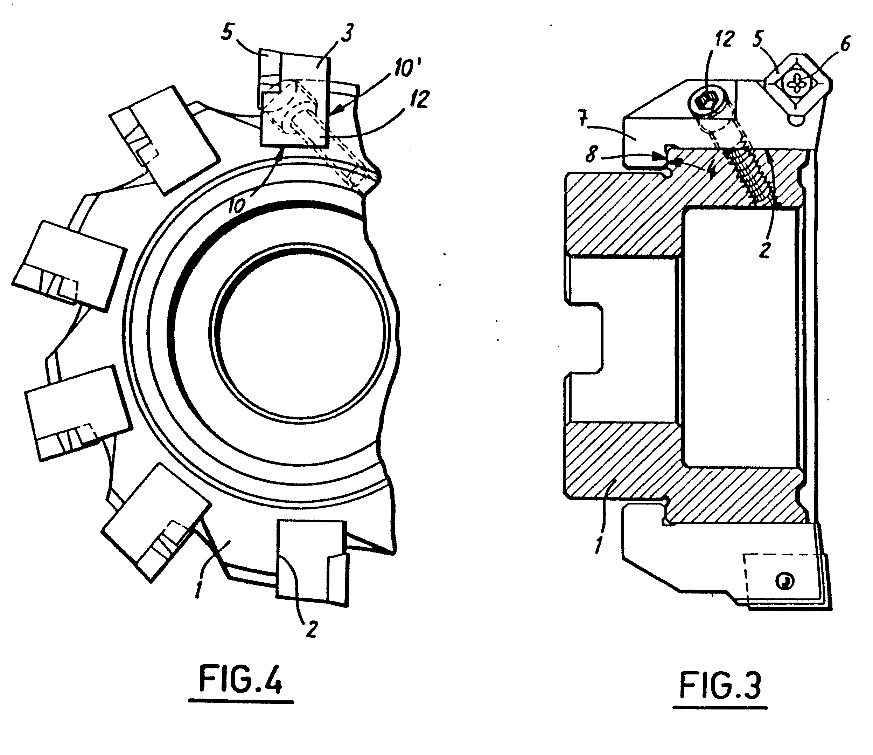

La seconde forme d'exécution, illustrée sur les figures 3 et 4, ne se distingue de la première forme d'exécution qui vient d'être décrite que par le mode de fixation des cartouches porte-plaquette 3 dans leurs logements 2 ménagés à l'extrémité périphérique antérieure du corps 1 de fraise. En effet, la fixation est obtenue ici par une seule vis 12, dont l'axe est situé dans un plan oblique par rapport au plan de la face d'appui 8 respectivement de la piste d'appui 4 et dirigé d'arrière en avant, assurant ainsi l'appui de la face 8 du talon 7 de la cartouche 3 contre la paste d'appui 4 du corps 1, et qui assure simultanément de par son orientation par rapport à l'axe du corps 1 de blocage de la cartouche 3 contre les faces 10, 10' de son logement 2, comme on peut le voir sur la figure 4.

Par rapport aux fraises connues à cartouches interchangeables avec appui axial, l'outil de coupe selon l'invention présente notamment les avantages suivants :

— lorsque les cartouches sont soumises à des efforts axiaux supérieurs à la normale, par exemple en cas de casse accidentelle d'une plaquette de coupe ou de blocage insuffisant de la cartouche, la pression axiale grâce à la conception nouvelle des surfaces d'appui tend à éloigner la face d'appui 8 du talon 7 de la cartouche 3 de la piste d'appui 4 du corps 1, au lieu de forcer l'une contre l'autre ces faces d'appui, comme cela est le cas dans les fraises connues, ce qui tend à endommager ces faces d'appui ;

' — le réglage axial individuel et précis de la position de la cartouche, ainsi que le recul de celle-ci pour une mise hors-service provisoire, est possible, alors que la conception des fraises connues de ce type rend impossible tout réglage ou recul axial.

### Revendications

1. Outil de coupe à cartouches porte-plaquette interchangeables, comportant un corps (1) de forme générale cylindrique présentant des logements (2) répartis à son extrémité périphérique antérieure et destinés à recevoir de façon amovible les cartouches (3) comportant chacune à son extrémité antérieure une plaquette de coupe (5) fixée sur la cartouche au moyen d'une vis (6) traversant un orifice central de la plaquette, caractérisé par le fait que le corps de l'outil (1) présente une piste d'appui périphérique (4) dont la surface est dirigée vers l'arrière dudit corps, et par le fait que chaque cartouche (3) est munie à son extrémité postérieure d'un talon (7) présentant une face d'appui (8) dirigée vers l'avant de la cartouche et destinée à venir, dans une position de service, en butée contre ladite piste d'appui du corps, et par le fait que les moyens de fixation de chaque cartouche (3) dans son logement prévu dans le corps (1) comprennent une première vis (11) destinée à coopérer avec un orifice traversant la cartouche et avec un filetage pratiqué dans le corps, les axes de cet orifice et de ce filetage étant situés dans un plan oblique par rapport au plan de la piste d'appui (4) respectivement de la face d'appui (8) et dirigé d'arrière en avant, de telle sorte qu'en position de service vissée, cette vis maintienne la face d'appui (8) du talon (7) de la cartouche (3) contre la piste d'appui (4) du corps (1) de l'outil.

2. Outil de coupe selon la revendication 1, caractérisé par le fait que lesdits moyens de fixation comportent une seconde vis (9) destinée à coopérer avec un orifice traversant la cartouche (3) et avec un filetage pratiqué dans le corps, les axes de cet orifice et de ce filetage étant situés dans un plan pratiquement parallèle au plan de la piste d'appui (4) respectivement de la face d'appui (8), cette vis étant destinée à bloquer la cartouche (3) dans son logement.

3. Outil de coupe selon la revendication 1, caractérisé par le fait que ladite première vis est une vis unique (12), et par le fait qu'elle est en outre orientée par rapport à l'axe du corps (1) de telle sorte qu'elle assure le blocage de la cartouche (3) simultanément contre deux parois adjacentes (10, 10') de son logement.

4. Outil de coupe selon l'une des revendications 1 à 3, caractérisé par le fait que chaque orifice traversant la cartouche (3) présente une forme allongée, de manière à fournir un jeu permettant le réglage de la position axiale de cette cartouche.

5. Outil de coupe selon l'une des revendications 1 à 4, caractérisé par le fait que la surface de la piste d'appui (4) du corps (1) est pratiquement perpendiculaire à l'axe de celui-ci, et que la face d'appui (8) du talon (7) de la cartouche (3) est pratiquement perpendiculaire à l'axe de celle-ci.

### Claims

1. Cutting tool with interchangeable insertholding cartridges, comprising a body (1) of a cylindrical general shape presenting recesses (2) distributed at its front peripheral end and intended to receive in a removable manner the cartridges (3), each comprising at its front end a cutting bit (5) fixed on the cartridge by means of a screw (6) traversing a central opening of the bit, characterized by the fact that said body of the tool (1) presents a peripheral supporting path (4), the face of which is directed towards the rear end of said body, and by the fact that each cartridge (3) is provided at its rear end with a back portion (7) presenting a supporting face (8) directed towards the front of the cartridge and intended to come, in a service position, into abutment against said supporting path of said body and by the fact that the fixing means of each cartridge (3) in its recess provided in said body (1) comprise a first screw (11) intended to cooperate with an opening traversing the cartridge and with a threading provided in the body, the axis of said opening and of said threading being situated in a plane oblique with regards to the plane of the supporting path (4) respectively of the supporting face (8) and directed from the back to the front, in such manner that in screwed service position, said screw keeps the supporting face (8) of the back portion (7) of the cartridge (3) against he supporting path (4) of the body (1) of the tool.

2. Cutting tool according to claim 1, characterized by the fact that said fixing means comprise a second screw (9) intended to cooperate with an opening traversing the cartridge (3) and with a threading provided in the body, the axis of said opening and of said threading being situated in a plane practically parallel to the plane of the supporting path (4) respectively of the supporting face (8), said screw being intended to lock the cartridge (3) within its recess.

3. Cutting tool according to claim 1, characterized by the fact that said first screw is a single screw (12), and by the fact that it is further oriented with regards to the axis of the body (1) in such a manner that it ensures the locking of the cartridge (3) simultaneously against two adjacent walls (10, 10') of its recess.

4. Cutting tool according to one of claims 1 to 3, characterized by the fact that each opening traversing the cartridge (3) presents an elongated shape, in such a manner to provide a slack enabling the setting of the axial position of this cartridge.

5. Cutting tool according to one of claims 1 to 4, characterized by the fact that the surface of the supporting path (4) of the body (1) is practically perpendicular to the axis thereof, and that the supporting face (8) of the back portion (7) of the cartridge (3) is practically perpendicular to the axis thereof.

**Patentansprüche**

1. Schneidwerkzeug mit auswechselbaren Plättchenträgern, mit einem im wesentlichen zylindrischen Körper (1), der Sitze (2) aufweist, die auf seinem vorderen Umfangsende verteilt und zur auswechselbaren Aufnahme der Schneidplättchenträger (3) bestimmt sind, die je an ihrem vorderen Ende ein Schneidplättchen (5) aufweisen, das mittels einer eine zentrale Öffnung des Plätchens durchsetzende Schraube (6) auf dem Träger befestigt ist, dadurch gekennzeichnet, dass der Werkzeugkörper (1) eine umlaufende Stützschulter (4) aufweist, deren Oberfläche zum hinteren Ende des Körpers gerichtet ist, und dass jeder Schneidplättchenträger (3) an seinem hinteren Ende mit einem Ansatz (7) versehen ist, der eine zum vorderen Ende des Trägers gerichtete Stützfläche (8) aufweist, die dazu bestimmt ist, in der Arbeitsstellung an der Stützschulter (4) des Körpers anzuliegen, und dass die Mittel zum Befestigen jedes Trägers (3) in seinem im Körper (1) vorgesehenen Sitz eine erste Schraube (11) umfassen, die mit einer den Träger durchsetzenden Öffnung und einem im Körper ausgebildeten Gewinde zusammenwirkt, wobei die Achsen dieser Öffnung und dieses Gewindes in einer zur Ebene der Stützschulter (4) bzw. der Stützfläche (8) geneigten Ebene liegen und von hinten nach vorne gerichtet sind, derart, dass in der eingeschraubten Arbeitsstellung diese Schraube die Stützfläche (8) des Ansatzes (7) des Trägers (3) gegen die Stützschulter (4) des Werkzeugkörpers (1) hält.

2. Schneidwerkzeug nach Anspruch 1, dadurch gekennzeichnet, dass die Befestigungsmittel eine zweite Schraube (9) umfassen, die mit einer den Träger (3) durchsetzenden Öffnung und einem im Körper ausgebildeten Gewinde zusammenwirkt, wobei die Achsen dieser Öffnung und dieses Gewindes in einer im wesentlichen parallel zur Ebene der Stützschulter (4) bzw. der Stützfläche (8) verlaufenden Ebene liegen, und wobei diese Schraube dazu bestimmt ist, den Träger (3) in seinem Sitz festzuhalten.

3. Schneidwerkzeug nach Anspruch 1, dadurch gekennzeichnet, dass die erste Schraube eine einzige Schraube (12) ist und dass sie ausserdem bezüglich der Achse des Körpers (1) derart orientiert ist, dass sie die gleichzeitige Befestigung des Trägers (3) an zwei benachbarten Wänden (10, 10') seines Sitzes sichert.

4. Schneidwerkzeug nach einem der Ansprüche 1 bis 3, dadurch gekennzeichnet, dass jede den Träger (3) durchsetzende Öffnung eine langgestreckte Form hat, derart, dass ein Spiel vorhanden ist, welches die Einstellung der Axiallage des Trägers gestattet.

5. Schneidwerkzeug nach einem der Ansprüche 1 bis 4, dadurch gekennzeichnet, dass die Oberfläche der Stützschulter (4) des Körpers (1) im wesentlichen senkrecht zur Achse desselben steht und dass die Stützfläche (8) des Ansatzes (7) des Trägers (3) im wesentlichen senkrecht zur Achse desselben steht.

FIG.1

FIG.2

FIG.4

FIG.3

0 024 597